# EUROPEAN PATENT APPLICATION

(11) **EP 0 747 188 A1**
(43) Date of publication of application: **11.12.1996**
(21) Application number: 95500082.3
(22) Date of filing: 09.06.1995
(51) Int. Cl.: B29B 17/02, B03B 9/06, B07B 4/00, B07B 7/01

(54) **Procedure for the separation and recovery of a plastic material from another metallic material, and device for its realisation**

(71) Applicant: MICROLITE, S.L., E-03330 Crevillente (Alicante) (ES)
(72) Inventor: Vives Candela, Jose, E-03330 Crevillente (Alicante) (ES); Sanchez Butron, Antonio, E-03330 Crevillente (Alicante) (ES)
(74) Representative: Perez Bonal, Bernardo

(57) **Abstract**

This procedure consists of the following stages:
I. Crushing of a stock material
II. Washing of the product
III. Drying of the crushed mass
IV AND IV'. Separation of the plastic material from the metallic material of a first and second stage.
V. Extrusion
VI. Exit of the plastic material

As to the actual separation stage, it consists in the tangential insertion of the material to separate a cylindrical body and cause two air currents, one tangential and the other ascendant.

## Description

### OBJECT OF THE INVENTION

The object of the present specification refers to a procedure for the separation and recovery of a plastic material from another metallic material, and to a device for its realization, directed towards the recovery of both materials for its subsequent reuse, performing all the above, in a non-contaminating manner.

### BACKGROUND OF THE INVENTION

The use of plastic materials has reached such an extreme, that hardly any industry exists which does not, in some way or another, use them, and not always singly, but on numerous occasions accompanied by other materials which may be metallic.

Some of the variations of these plastic materials have reached such a level of use, that the elimination, after service, the recycling, has become a serious state problem.

Specifically, it is in the field of the elimination or recycling of these plastic materials in a non-contaminating manner, where everybody is investigating, trying to find ways of elimination, or better still, reuse of these materials so that their service does not prove a real cancer for the wellbeing of nature.

Given the long duration of the degradation cycles of some of these materials, their reuse becomes necessary, since it is prohibitted to dump them due to the long degradation period.

Specifically, the use of polystyrene is very great in any type of industry, and of widly extensive in the food industry, since they are used for yogourt, margerine, and other containers, and almost always acompanied by metallic covers, more specifically of aluminium, due to which, it is necessary for their reuse, to proceed to separate the polystyrene from the aluminium, as well as from the paper, used for the labels, adhesives and others which sometimes accompany them.

Now then, none of the solutions offered to date works, due to various reasons. On one hand, the incineration ostensibly decreases the volume of the residues, but generates other dangers, when the problem of the polystyrene is simply its slow rhythm of degradation.

On the other hand, the chemical recovery of the polystyrene generates great volumes of residues and contaminates the aquifers, so that the scarce industries which recover this product are not considered stable, in permanent structures, but that they are closed up and eradicated by the local authorities as soon as the damages on the affected towns are detected.

Apart from this, the recovery procedure is so imperfect that its reuse is advisable and in a mimium percentage.

Due to this, the burial of these residues was resorted to, but the high degree of degradation resistance offered, specifically by this product, generated sufficient criticisms to make the developed countries reject them, lumbering the Third World with them.

Returning to the subject of the actual contaminating recovery as only reference for situating the proposed invention, this technique consists in the availability of ponds, in which is carried out a water washing of the previously crushed residual polystyrene.

This material, due to the abundance of the residual component of the food containers, is converted, once crushed into slabs.

Apart from the polystyrene, this mixture of residual product is comprissed of aluminium remains, coming from the covers which have been defectively torn from the containers or inserted inside them after use, paper from the labels and lacterous residues.

It is generally the custom to accelerate the washing process and the elimination of lacteous remains by adding detergents to the water, which reduces the washing time.

A burning is subsequently performed by means of chemicals, varying the dwell times depending on the temperature and also on the concentration of the latter.

After a series of decantings and overflows, all the sludge originating form the burning is removed from the burning ponds and passed on to sedimentation ponds, the latter being of a configuration in the form of simple excavations in the terrain adjacent to the plant, where all these sludges are concentrated due to filtering of liquids in the terrains caused by a high degree of contamination of the indicated aquifers.

Apart from this, these concentrated, highly contaminating sludges require elimination, generally by means of dumping, which also lacks adequate controls.

However, these sludges are rich in aluminium, adding an additional damage to the energetic economy and at worldwide scale of the country, given the elevated energy expense its production involves.

All this entails a conventional process with the following stages:
1.- Crushing
2.- Washing
3.- Burning with chemicals
4.- Storage

### DESCRIPTION OF THE INVENTION

Under these circumstances, a totally original procedure is defended, which separates and recovers practically a hundred percent of the plastic materials as well as the metallic materials, without the intervention of any type of chemicals which might interfere in their composition or structure, besides carrying this out in a totally and absolutly ecological manner.

This procedure consists of a primary crushing since we part from a compacted material in order to save space, specially during transportation, using suitable mills, proceeding subsequently, to washing them without using chemicals, and to drying them, as prior step to their insertion in the devices for separating the plastic material from the metallic material and the paper, which under the form of labels, always accompanies these containers.

The lacteous material is separated, together with the water during the washing, from the previous contents of these containers, which may be reused as dressing.

This separating device is based on the difference in the specific weights existing between the two fundamental materials, and in its different behaviour versus kinetic forces, in this case caused by air jets.

With this premise, two separating devices are provided, achieving in the first of these, a very high percentage of separation of the plastic material from the metallic material, and very low cost, both of installation as of energetic consumption, whilst the second device, is found connected in series with the former, to which only the small fraction of plastic-metallic material not separated in the initial stage arrives at.

The first of said devices conforms to a central cylindrical body, finished off in various frustoconical branches, the lower one for the output of the heaviest element, and the upper one for the output of the lightest, linking the upper output with the second device.

The input of the material to be separated is carried out by means of a nozzle, with thrust of air, in a tangential manner, due to which the jet of air with the material to be separated circulates adherred to the inside wall of the body, which has been made of ondulated sheet, so that with the continuous knocking, the heaviest material is separated from the lightest material.

Motivated by the kinetic forces originated inside this body, the heaviest materials drop towards the lower output mouth, whilst the lightest are situated in the center of the circular body and exit via the upper mouth with the help or not, of additional air currents.

The second one of the devices consists of a vertical cylinder with three perfectly differentiated bodies, the material from the previous stage is inserted in the upper, in tangential manner, so that air circulation originates in a descending and tangential spiral over the walls of a cylindrical, internal body with rough and ondulated walls, so that when knocked, this material separates and drops to the second body.

In this first body is where the output of the lightest material or materials is to be found in its upper part.

In the second body or central body, a kind of ring or deflector is placed, also in its interior, forming an integral part with its walls, which are narrow in relation to the diameter of the cylindrical body, where the separation from the walls of the heaviest material which rotates due to the air current is provoked, falling towards the third body.

This third and last body of the three which constitue the device in question, is made up of a kind of inverted frustum of cone, with the heaviest product exiting through its center, whilst the periphery nearest to the output mouth, presents a kind of orifice through which an advantageously heated air current insufflates, provoking the ascent of the least heavy material, to reach the upper output.

One or various lines of apertures are also provided, placed on corresponding generatrix lines, through which air is also insufflated, and whose mission consists in detaching the heaviest plastic material which, since it is still rotating in a spiral, has to be separated from the walls of the frustum of cone so as to be totally detached.

This third and last section of the device is finished off with another frustrum of cone, through the central area of which, the heaviest product exits, to laterally penetrate a nozzle for the input of the latterly described air.

As the central air current cannot be excessively strong in order not to drag the heaviest material together with the lightest one, the upper exit is provided with an open lower zone, the aperture of which may be adjusted as desired, and with a new lateral air input which causes a pull of air, contributing to the ascending current for the evacuation of this product.

With this device is achieved a degree of separation of the materials which nears 100%, however, in the framework of this procedure, an extruder is placed in series.

The residues thus obtained may be subsequently handled as is most convenient for their reuse.

### DESCRIPTION OF THE DRAWINGS

To complement the description given, and in order to facilitate a better amd easier understanding of the characteristics of the invention, the present descriptive report is enclosed, as an integral part of the same, with a series of drawings, in which, with illustrative and never limitative character, the following has been presented:
Figure 1 represents a diagram of the procedure which is the object of this patent.

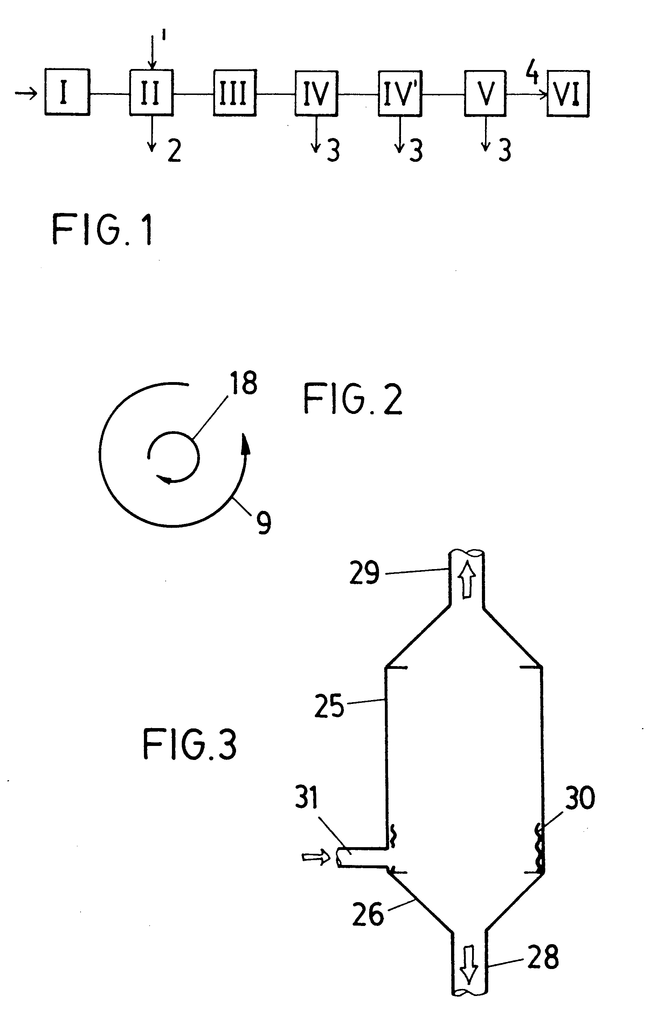

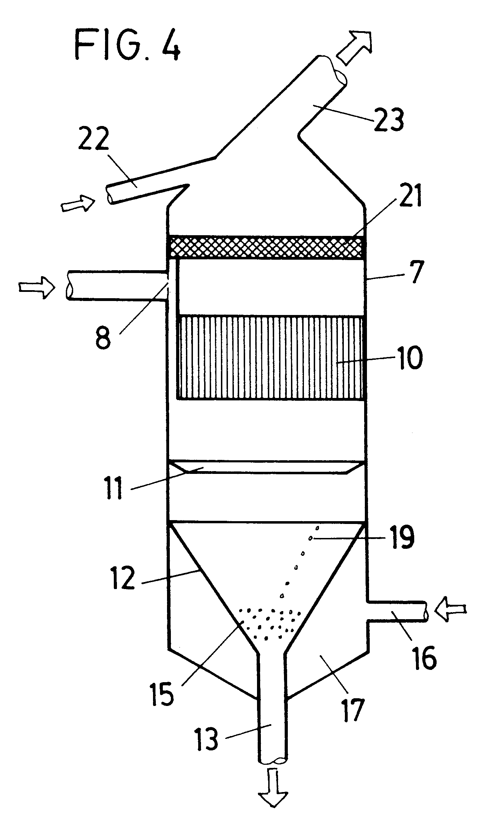

Figure 2 schematically represents the direction of the air currents, both the upper one, which descends in a spiral, and the lower one which ascends in similar manner.
Figure 3 corresponds to a view, also schematical, of the separator assembly of the first stage.
Figure 4 corresonds to a schematical view of the separator assembly of the second stage.

### PREFERRED EMBODIMENT OF THE INVENTION

In view of the listed figures, it may be observed how the recommended procedure, and for the specific case of recovery and profit of the aluminium polystyrene which constitutes the food containers, such as yogourts, is carried out by means of the following stages.
I.- Crushing of the stock material, formed by great irregular blocks or long bands, using conventional mills for this crushing, in the first case, and ironing and cutting in the second.
II.- Washing of the product, using only water (1) though it may be conveniently, previously heated. The lacteous residue (2) may be used as dressing.
III.- Drying of the crushed mass by means of any conventional system.
IV.- Almost total separation of the polystyrene (4) of the aluminium paper assembly (3) in two stages.
V.- Optional, subsequent, total separation by means of an extruder.
VI.-Exit of the polystyrene for subsequent commercialization, under any of the forms undertaken by industry.

It is to be noted, how this procedure is conducted in a totally ecological manner, with an enormous respect towards nature, since no contaminating chemicals are used which might influence either the physical environment or the elementos to be recycled, due to the fact that both the polystyrene and the aluminium have not been influenced or modified in their own physical nature, and are obtained in pure condition.

On its part, the separator device of the first stage is constituted by a cylindrical body (25), finished off, both on its upper and on its lower part by various frustroconical bodies (26) and (27), equipped with respective outputs (28) and (29).

The crushed material originating from the previous stage, is forcibly inserted via the nozzle (31), with the help of an air jet, in tangential manner, so that this air jet together with the crushed material, rotates inside the body and in contact with its walls, which present an ondulated contact zone (30), on which, the separation of the aluminium from the polyestyrene is practically originated by means of the knocking.

In this swirl produced, the heaviest material, in this case the polystyrene, drops and exits via the output (28), whilst the lighter, which is the case of the paper and the aluminium, exit via the upper mouth (29), where a small conventional air suction device may be conveniently placed which contributes with the exit of the material.

As previously indicated, in this first stage a high efficiency of separation is achieved in order to attain separation rates in the order of 100% aproximately, the product which exits via the mouth (28) is carried to a second stage, for which, in this case the separation device is constituted by a cylindrical body, in which three zones or bodies are observed, the upper (7) body equipped with an input mouth or nozzle (8) for the assembly of materials to be separated, which enter inside it, causing a circulation of air (9) as represented in figure (2).

This circulation of air (9) causes, due to the centrifugal forces it impresses on the solid material, that the heaviest particles are situated in the periphery of the air current, and hence, the circulation of the heaviest material, logically in descending spiral, is carried out on the internal wall of the body (7).

As it is to be expected that the separation of polystyrene-aluminium-paper has not be complete during the previous stage, an internal body (10) has been provided, also cylindrical and with rough and ondulated walls, in such a way that the knocking produced between these rough or ondulated surfaces contributes to the final separation of the elements integrating the assembly, in similar way to what has been previously described.

In a similar manner as the heaviest particles which are situated externally by means of the centrifugal force, the lightest, as is the case of aluminium and paper, remain in the central zone of these floating currents, being extracted by the upper part of the assembly as shall be seen as follows:

In order to detach the heaviest particles, that is to say, the polystyrene, from its contact with the internal walls of the device and cause its final drop in the paracentral body of the separation device, a kind of ring or deflector (11) is provided, with one of its edges forming integral part of the internal wall of the device, and the free edge situated at a lower height than the former, that is to say, the ring is inclined downwards

Finally, the third or lower body, is internally constituted by an inverted frustrum of cone (12), with the mouth for the exit of the polystyrene, situated lower than the same (13).

This frustrum of cone (12) is equipped on its lower zone with a pluralidad of orifices (15) through which air passes from the nozzle (16), also causing a spiral current (18) in the receptacle (17) and which, in this manner enters the inside of the device in question and ascends through its interior, dragging the aluminium and paper particles it encounters on its way.

As the equilibrium between the forces of air currents (9) and (18) must be perfect in order to avoid interference, it may be advantageous, and in fact it is thus carried out in the specific case of the example, to reduce the air current forces (18) and compensate it by previously heating said air.

In the frustrum of cone (12) one or various lines of orifices (19) have been provided, intended to cause the total detachment of the polystyrene from its walls and cause its final exit through the mouth (13), due to its actual weight.

On its part, the exit of the less heavy particles, which as has already been indicated, is carried out by the drag that the air jet (18) effects, is also equipped with an absorption system to contribute to said drag, which consists in an open zone (21), with the manual possibility of adjusting said aperture (21), and a new input nozzle of air (22), which finally drags them towards the exit (23).

This description is not made more extensive with the comprenshion that any expert in the art will have sufficient information to understand the scope of the invention and the advantages derived from it, together with the procedure to reproduce the same.

It is understood that, if the essentiality of the invention is not altered, both the variations in the materials and the form, size and disposition of the elements, are susceptible to changes within the characterization of the same.

The terms used during the description and their meaning, must always be considered as non-limitative.

## Claims

1. Procedure for the separation and recovery of a plastic material from another metallic material, and a device for its realization, which carries out a prior crushing and washing of the product, essentially characterized in that, after this crushing and washing, a drying is performed (III) with its subsequent insertion, by means of air impulsion into a double device (IV) and (IV') for separation of the plastic materials from the rest which make up the assembly, and into an extruder (V), ending up, as last stage of the procedure, by the separate storage (VI) of the different products for their subsequent reuse.

2. Procedure for the separation and recovery of a plastic material from another metallic material, and a device for its realization, which is essentially characterized in that in both separate stages, an air jet is used with the material to be separated, which is inserted tangentially into a cylindrical body by means of an air jet, one tangential and the other ascending, the heaviest, already separated material, exiting via its lower mouth, and the lightest material via its upper mouth.

3. Procedure for the separation and recovery of a plastic material from another metallic material according to claim 2, characterized in that the separator device (IV) of the first stage, is constituted by a cylindrical, central body (25), partially and internally coated with an ondulated material (30), where in tangential manner, the material to be separated enters, by means of air impulsion via a nozzle (31).

4. Procedure for the separation and recovery of a plastic material from another metallic material, and device for its realization, according to claims 2 and 3, characterized in that the central body (25), is finished off on the lower part by a frustoconical body (26), with outputs (28) for the heaviest material, and on the upper part by another frustroconical body (27), with its corresponding output mouth (29) for the lightest material.

5. Procedure for the separation and recovery of a plastic material from another matallic amterial, and device for its realization, according to claim 2, characterized in that in the separator device (IV') of the 2nd. stage, two air currents are produced, one upper one (9), which carries the material coming from the previous stage, and another lower one (18), in such a way that the air current (9) enters tangentially inside the upper body (7) of the device, which is cylindrical, causing a descending spiral, whilst in its body or paracentral zone a deflector is placed (11), and in the third or lower body an inverted frustrum of cone (12), equipped with a lower output (13) and with a pluralidad of perforations (15) in its lower zone for the passage of the air current (18) which enters into the device through the nozzle (16).

6. Procedure for the separation and recovery of a plastic material from another metallic material, and device for its embodimente, according to claims 2 and 5, characterized in that the output (23) of the lightest products is carried out via the upper part of the first body (7), which is additionally equipped with an extra input of air (22) which cooperates together with the current (18) in its exit, and of a perforated zone (21) with the possibility of adjusting its aperture.

7. Procedure for the separation and recovery of a plastic material forn another metallic material, and device for its embodiment, according to claims 2 and 5, characterized in that the body (7) is equipped internally with an ondulated zone (10).

8. Procedure for the separation and recovery of a plastic material from another metallic material, and device for its embodiment, according to claims 2 and 5, characterized in that the deflector (11) is a ring with its walls inclined downwards.

9. Procedure for the separation and recovery of a plastic material from another metallica material, and device for its realization, according to claims 2 and 5, characterizead in that the frustrum of cone (12) is also equipped with one or various lines of apertures (19) coinciding with respective generatrix lines.

10. Procedure for the separation and recovery of a plastic material from another metallic material, and device for its realization, according to claims 2 and 5, characterized in that the air jet which causes the current (18) may be conveniently heated.

11. Procedure for the separation and recovery of a plastic material from another emtallic material, and device for its realization.
